Europäisches Patentamt

European Patent Office

Office européen des brevets

(19)

(11) **EP 0 479 580 B1**

(12) # EUROPEAN PATENT SPECIFICATION

(45) Date of publication and mention
of the grant of the patent:
**29.01.1997 Bulletin 1997/05**

(51) Int Cl.$^6$: **C08L 23/16**, C08L 23/10

(21) Application number: **91309052.8**

(22) Date of filing: **02.10.1991**

(54) **Powder molding method using thermoplastic elastomer powder**

Verfahren für Pulverformung unter Verwendung von Pulver aus thermoplastischem Elastomer

Procédé pour le moulage à poudre utilisant de poudre en elastomère thermoplastique

(84) Designated Contracting States:
**DE FR GB IT NL**

(30) Priority: **03.10.1990 JP 267299/90**
**08.08.1991 JP 199589/91**

(43) Date of publication of application:
**08.04.1992 Bulletin 1992/15**

(73) Proprietor: **SUMITOMO CHEMICAL COMPANY LIMITED**
**Osaka-shi, Osaka 541 (JP)**

(72) Inventors:
• **Hikasa, Tadashi**
**Kimitsu-gun, Chiba (JP)**
• **Mendori Hiroaki**
**Ichihara-shi, Chiba (JP)**
• **Hamanaka, Tatsuo**
**Ichihara-shi, Chiba (JP)**
• **Igarashi, Toshio**
**Sakyo-ku, Kyoto-shi, Kyoto (JP)**

• **Shida, Yuu**
**Takatsuki-shi Osaka (JP)**

(74) Representative: **Cresswell, Thomas Anthony et al**
**J.A. Kemp & Co.**
**14 South Square**
**Gray's Inn**
**London WC1R 5LX (GB)**

(56) References cited:
**EP-A- 0 338 860**

• **WORLD PATENTS INDEX LATEST Week 9014, Derwent Publications Ltd., London, GB; AN 90-104961**
• **WORLD PATENTS INDEX LATEST Week 9014, Derwent Publications Ltd., London, GB; AN 90-104962**

Remarks:
The file contains technical information submitted after the application was filed and not included in this specification

EP 0 479 580 B1

## Description

BACKGROUND OF THE INVENTION

1. Field of the Invention

The present invention relates to a powder molding process using an olefin type thermoplastic elastomer powder. More specifically, it relates to a powder molding process such as a powder rotational molding. The products thereof are suitable for use in particular, as covering materials and housings for molded articles in various fields, regardless of the backing material used.

2. Description of the Related Art

With regard to covering materials used as interior decorative materials of automobiles, there is an increasing demand for those which have a light weight and a good and soft feeling, and which can be given an embossed pattern or stitch pattern to increase the value of molded articles. Also, during the scrapping of cars, acidic substances are generated by a combustion of such interior decorative materials to cause a contamination of the air, and thus create serious social problems such as acid rain, etc., and therefore, there is a strong demand for non-polluting materials.

Known covering materials of the prior art are vacuum molded olefin type thermoplastic elastomer (hereinafter called TPO) sheets and vacuum formed sheets composed mainly of vinyl chloride resins and ABS resins, or rotational molded or slush molded sols composed mainly of vinyl chloride resins for paste and plasticizers (hereinafter called sol molding).

Vacuum formed TPO sheets attain the objects to provide a light weight and non-polluting material, but it is difficult to impart complicated shapes thereto.

Also, vacuum formed sheets contain a high residual molding stress caused during the forming process, and thus have a drawback in that cracks will appear after long term usage.

Vacuum formed sheets composed mainly of vinyl chloride resins and ABS resins have drawbacks similar to those of vacuum formed TPO sheets, in that it is difficult to impart complicated shapes thereto, and further that, compared with TPO sheets, they have the drawback of heavier weight and cause pollution.

Sol moldings composed mainly of vinyl chloride resins for paste and plasticizers give a soft feeling, and complicated shapes can be imparted thereto. However since the gellation temperature is low, they melt rapidly while being molded, and thus many drawbacks arise, for example, problems in the processing such as flow marks, lip or the sol fiber-forming phenomenon, the inherent problems of vinyl chloride such as a heavier weight and pollution, and further problems in that the inner window glass of the automobiles produced from said sol molding suffers from hazy appearance due to the use of a large amount of plasticizers.

Due to these drawbacks and problems of the known molding methods, powder molding methods have recently attracted attention.

Powder molding methods include, in general, a flow dipping method, an electrostatic coating method, a flame spray coating method, and a powder rotational molding method, and particularly for producing interior decorative materials for automobiles, the powder rotational molding method is suitable.

A partially crosslinked TPO composition is known from Japanese Unexamined Patent Publications (Kokai) Nos. 48-26838, 53-149240, but the known molding methods currently used for the partially crosslinked TPO are:

a) injection molding (shear rate during processing: $\dot{\gamma} \geq 10^3$ sec$^{-1}$);
b) extrusion molding ($10^1 \leq \dot{\gamma} \leq 10^2$ sec$^{-1}$);
c) calendering ($10^2 \leq \dot{\gamma} \leq 10^3$ sec$^{-1}$);
d) compression molding of the primarily processed product in b. or c.; and
e) vacuum forming of the primarily processed product in b. or c.,

but all of these methods require the molding temperatures are higher or equal to the softening point, and the molding pressures must be varied depending on the viscosities and the shear rates corresponding to the respective processing conditions.

Nevertheless, in the molding method such as a powder molding at a shear rate of $10^0$ sec$^{-1}$ or less or under an approximately stationary state of the polymer, at a vibration frequency of 1 radian/see., and with no application of a pressure or under a very low pressure ($\leq 1$ kg/cm$^2$), the flowability becomes extremely poor, and accordingly, the molding becomes very difficult. Further, even if a molding is possible, the poor flowability in the low shear rate region cause an incomplete thermal fusion between the powder particles, and only molded articles with a low mechanical strength can be obtained.

For this reason, for example, Japanese Unexamined Patent Publication (Kokai) No. 2-57309 discloses the following inventions:

"1) An embossed thermoplastic elastomer molding, having an emboss pattern formed on the surface by melting a thermoplastic elastomer powder comprising a polyolefin type resin and an ethylene-α-olefin type copolymer rubber into a flowing plasticized state in a roating and heated mold with an emboss pattern.
2) A method of preparing a thermoplastic elastomer molding, which comprises introducing a thermoplastic elastomer powder comprising a polyolefin type resin and an ethylene-α-olefin type copolymer rubber into a mold with an emboss pattern, followed by sealing the mold, then melting the thermoplastic elastomer powder by roating and heating the mold into a flowing plasticized state, and subsequently cooling the mold to obtain a thermoplastic elastomer molding having an emboss pattern on the surface." Namely, this is an example of how to obtain a TPO molding by a powder rotational molding, in which TPO with a low flowability in the low shear rate region is melted and adhered, while in a flowing plasticized state, to the inner surface of the mold which is rotated and heated.

According to this method, however, the flowability of TPO powder in the low shear rate region is still poor, and therefore, the thermal fusion strength between powder particles is too low, causing a problem that pinholes, etc. may be formed, and a molding having a fully satisfactory appearance and physical properties, etc., has not been obtained.

SUMMARY OF THE INVENTION

An object of the present invention is to solve the above problems and provide a process for powder molding using a thermoplastic powder which has a high flowability even when substantially no forming pressure is applied, by which a molding having a required high thermal fusion strength between powder particles can be obtained without pinholes.
Other objects and advantages of the present invention will be apparent from the following description.

1) In accordance with the present invention, there is provided a powder molding process, other than a powder slush molding process, which comprises molding a thermoplastic elastomeric powder which comprises a partially crosslinked elastomeric composition comprising a mixture of 5% by weight to 80% by weight of an ethylene-α-olefin copolymer rubber and 20% by weight to 95% by weight of a polyolefin resin having a melt flow rate (MFR) of 20 g/10 min. or more at 230°C under a load of 2.16 kg according to JIS K-7210, obtainable by dynamically crosslinking the elastomeric composition in the presence of a crosslinking agent, wherein said elastomeric composition has a complex dynamic viscosity $\eta^*(1)$, at a frequency of 1 radian/see., in dynamic viscoelasticity measurement at 250°C of 1.5 x $10^4$ Pa (1.5 x $10^5$ poise) or less, a Newtonian viscosity index n of 0.67 or less, where

$$n = \{log\eta^*(1) - log\eta^*(100)\}/2$$

in which $\eta^*(1)$ is as hereinbefore defined and $\eta^*(100)$ is the complex dynamic viscosity at a frequency of 100 radian/sec.
and which composition has a hardness (shore D) of 45 or less.

2) In accordance with the present invention, there is further provided a process for powder molding as defined in 1) above, wherein a crosslinking coagent is used in combination in the dynamic crosslinking.

DESCRIPTION OF THE PREFERRED EMBODIMENTS

According to the present invention, by utilizing the specific features of the powder molding method which can form moldings with a small residual molding stress, a low hardness and a complicated shape, covering materials, particularly those used as interior decorative materials for automobiles, made of a thermoplastic elastomer having a light weight and non-polluting can be provided.
In the present invention, the powder molding method includes molding methods such as the flow dipping method, the electrostatic coating method, the flame spray coating method, and the powder rotational molding method, but does not include the powder slush molding method described in the scope of claim for patent in Japanese Unexamined Patent Publication (Kokai) No. 58-132507.
Namely, the powder molding method of the present invention does not include the following powder slush molding method, "comprising the steps of fixing a vessel having an opening and containing a necessary amount of a thermoplastic elastomer powder to a mold having an opening heated to a temperature sufficiently higher than the melting temperature of the thermoplastic elastomer powder with the openings being matched to each other or fixing the vessel in the hollow portion of the mold to be integrated, quickly feeding the powder to the respective portions within the mold while the mold is rotated and/or rocked, to cause the powder to be melded and adhered thereto, and if necessary, discharging the superfluous powder into the vessel".
The mold heating system to be used in the present invention includes the gas-fired furnace system, heated oil circulation system, dipping into a heated oil or a hot fluidized sand, and a high frequency induction heating system.
The thermoplastic elastomer powder to be used in this powder molding method must have a high powder flowability under a low shear rate and a low pressure, and be easily melted by the heat supplied primarily from the mold.
The specific feature of the present invention resides in an elastomer composition having a certain specific viscoelasticity comprising mixtures of ethylene-α-olefin copolymer rubbers and polyolefin resins, optionally dynamically partially crosslinked there with in the presence of a crosslinking agent, and in the use of a thermoplastic elastomer powder obtained by powdering said elastomer composition at a lower temperature than the glass transition temperature. By the use of said thermoplastic elastomer powder it has become possible to carry out a molding requiring a high flowability under a low shear rate as such a powder molding method e.g., a powder rotational molding method.

The ethylene-$\alpha$-olefin copolymer rubber used in the present invention includes rubbers composed mainly of olefins including, ethylene-propylene copolymer rubbers, ethylene-propylene-nonconjugated diene copolymer rubbers, ethylene-butene-1 copolymer rubbers, ethylene-butene-1-nonconjugated diene copolymer rubbers and the like. Examples of nonconjugated dienes preferably usable include dicyclopentadiene, ethylidenenorbornene, 1,4-hexadiene, cyclooctadiene, methylene-norbornene and the like, and among them, an ethylene-propylene-ethylidenenorbornene rubber (hereinafter abbreviated EPDM) provides an elastomer powder having a high heat resistance and superior tensile characteristics. Particularly, an oil-extended olefin copolymer rubber containing 30 to 120 parts by weight of a mineral oil type softener such as paraffinic process oil per 100 parts by weight of an ethylene-$\alpha$-olefin copolymer rubber having a Mooney viscosity ($ML_{1+4}$ 100°C) of 130 to 350, preferably 200 to 300, as measured at 100°C according to ASTM D-927-57T, is preferable since a good balance between the tensile characteristics and the flowability can be obtained.

As the polyolefin resin, polypropylenes or copolymers of propylene with $\alpha$-olefins are preferably used. Particularly, the use of a copolymer resin of propylene and an $\alpha$-olefin enables the hardness of the molding to be lowered. Preferably, propylene-ethylene random or block copolymer resins, propylene-butene-1 random or block copolymers resins may be employed. The polyolefin resin has a melt flow rate (MFR) of 20 g/10 min. or more, preferably 50 g/10 min. or more, as measured at 230°C under a load of 2.16 kg according to JIS K-7210. A thermoplastic elastomer powder prepared by using a polyolefin resin with a melt flow rate of less than 20 g/10 min. cannot provide a molding having a high strength, because the powder is only softened during powder molding, and therefore, it is difficult to cause the powder particles to be melted and adhered to each other. The formulation ratio of the ethylene-$\alpha$-olefin copolymer rubber to the polyolefin resin is 5% by weight to 80% by weight, preferably 20% by weight to 80% by weight of the ethylene-$\alpha$-olefin copolymer rubber and 20% by weight to 95% by weight, preferably 20% by weight to 80% by weight of the polyolefin resin, when the total amount of the both components is 100% by weight.

An organic peroxide is preferably employed as the crosslinking agent which dynamically crosslinks the mixture of the ethylene-$\alpha$-olefin copolymer rubber and the polyolefin resin, and a dialkyl peroxide is preferably employed as the organic peroxide. More preferably, an extremely small amount of an organic peroxide is employed in the presence of a crosslinking coagent such as a bismaleimide compound, to effect a dynamic crosslinking. This enables the ethylene-$\alpha$-olefin copoly-

mer to be adequately crosslinked to provide a high heat resistance, and at the same time, a high flowability. In this case, the crosslinking coagent is preferably used in an amount of 1.5 part by weight or less, more preferably 0.6 part by weight or less, per 100 parts by weight of the mixture of the ethylene-$\alpha$-olefin copolymer rubber and the polyolefin resin. The organic peroxide as the crosslinking agent is preferably also used in an amount of preferably 0.4 part by weight or less, more preferably 0.1 part by weight or less, most preferably 0.07 part by weight or less.

As the apparatus to be used for the dynamic crosslinking, a continuous kneading extruder such as a single screw extruder or a twin screw extruder is preferably used. Particularly, it is preferable to effect a continuous extrusion crosslinking at a maximum shear rate $\dot{\gamma}$ max $\geq 10^3$ sec$^{-1}$ by using a twin screw extruder. If the extrusion crosslinking is effected at $\dot{\gamma}$ max $< 10^3$ sec$^{-1}$, the size of the dispersed particles of the ethylene-$\alpha$-olefin copolymer rubber becomes too large, and thus it unpreferably causes a poor appearance.

The present elastomer composition has a complex dynamic viscosity $\eta^*(1)$ measured at a frequency of 1 radian/sec. in a dynamic viscoelasticity measurement at 250°C of $1\cdot5 \times 10^4$ Pa ($1.5 \times 10^5$ poise) or less, preferably $1\cdot0 \times 10^4$ Pa ($1.0 \times 10^5$ poise) or less, and more preferably $3\cdot0 \times 10^3$ Pa ($3.0 \times 10^4$ poise) or less.

If the complex dynamic viscosity $\eta^*(1)$ measured at a frequency of 1 radian/see. exceeds $1\cdot5 \times 10^4$ Pa ($1.5 \times 10^5$ poise), the elastomer powder prepared by using such an elastomer composition will not be melted and adhered to the mold surface, and thus the molding such as the powder molding under an extremely low shear rate of 1/sec$^{-1}$ cannot be effected by use of said elastmer powder.

The present elastomer composition has a Newtonian viscosity index n calculated from the following formula by using the complex dynamic viscosity $\eta^*(1)$ at a frequency of 1 radian/see. and the complex dynamic viscosity $\eta^*(100)$ at a frequency of 100 radian/see. of 0.67 or less, preferably 0.60 or less, and more preferably 0.53 or less in the dynamic viscoelasticity measurement at 250°C:

$$n = \{\log\eta^*(1) - \log\eta^*(100)\}/2.$$

If the Newtonian viscosity index n exceeds 0.67, even if the complex viscosity $\eta^*(1)$ is $1\cdot5 \times 10^4$ Pa ($1.5 \times 10^5$ poise) or less, the dependency of the complex dynamic viscosity on the frequency becomes greater, and thus a mutual thermal fusion between the molten elastomer powder particles is not completed in a powder molding under a very low shear rate of 1/sec or less and a very low pressure of 1 kg/cm$^2$ or less, and such a powder molding produces only moldings having a low mechanical strength.

In the present invention, the molding obtained by using the thermoplastic elastomer powder has a hardness (shore D) of 45 or less.

If the hardness (shore D) exceeds 45, the molding becomes too hard and gives not only an undesirable hard feeling, but also an undesirably poor protection of occupants of a vehicle during a collision when used as covering material for interior decorative of an automobile.

In the present invention, preferably the elastomer composition is pulverized by the freezing pulverization method using liquid $N_2$. Pellets of the elastomer composition cooled to a pulverizing temperature of -40°C or lower, preferably -70°C or lower, more preferably -90°C or lower, can be obtained by a mechanical pulverization method using a hammer mill, pin mill, etc.

If the composition is pulverized at a temperature higher than -40°C, the particle sizes of the pulverized elastomer powder are coarsened, and thus the powder moldability is undesirably lowered. To prevent an elevation of the polymer temperature to the glass transition temperature or higher during the pulverization operation, preferably a method having little heat generation and a high pulverization efficiency is employed.

Also, preferably a pulverization apparatus which is cooled by an external cooling source is employed.

The elastomer powder obtained is preferably pulverized to the extent such that 95% or more of the total weight passes through a 32 mesh Tyler standard sieve. If the accumulation ratio on the 32 mesh Tyler standard sieve exceeds 5%, thickness irregularities are generated during the powder molding. These thickness irregularities cause irregularities to the flexibility of the molding whereby, for example, bending wrinkles are formed, and lower the commercial value of the molding.

An organic or inorganic fine particulate powder can be added to the elastomer powder of the present invention, to prevent reagglomeration (mutual adhesion). This addition can be made before or after the classification, but an addition before the classification is preferable because the classification and blending operations thus can be performed at the same time.

The organic or inorganic fine particulate powder is a fine powder having an average particle size of 50 $\mu$m or less and having a higher glass transition temperature or higher melting temperature than room temperature. For example, there are included polyolefin resin powder, talc, kaolin, silicon oxide, and alumina oxide, but a polyolefin resin powder is particularly preferable in that the thermal fusion strength between the elastomer powder particles is not lowered during the molding. The polyolefin resin as the mutual adhesion preventive agent is preferably added in an amount of from 0.2 to 20 parts by weight based on 100 parts by weight of the elastomer powder. If this amount is less than 0.2 part by weight, it is slightly difficult to prevent a mutual adhesion, and if more than 20 parts by weight, the flexibility is undesirably impaired. Therefore, more preferably this amount is 0.5 to 15 parts by weight.

The elastomer composition of the present invention can be formed into an elastomer composition having a excellent flexibility by blending an uncrosslinked ethylene-$\alpha$-olefin copolymer rubber or a polyolefin resin in an amount of 50 parts by weight or lesss based on 100 parts by weight of the partially crosslinked type elastomer composition. As the $\alpha$-olefin, propylene and butene-1 may be used alone or in combination. Particularly, an ethylene-propylene copolymer rubber, ethylene-butene-1 copolymer rubber, ethylene-propylene-nonconjugated diene copolymer rubber or ethylene-butene-1-nonconjugated dience copolymer rubber with an ethylene content of 40 to 90% by weight, preferably 70 to 85% by weight, having a $ML_{1+4}$ 100°C of 50 or less is employed.

During the demolding of the powder molded product by an elastomer powder, the adhesion thereof to the inner mold surface is sometimes strong, and thus defects such as bending wrinkles or whitening may be generated when the demolding is forcibly attempted. Accordingly, it is often necessary before molding to coat the inner mold surface with a mold release agent, such as dimethylpolysiloxane. For a continuous production of many moldings, however, the mold release agent must be coated for every few moldings, which will lead to increased costs. In such a case, although an improvement of the mold material is possible, the method of adding 2 parts by weight or less of a methylpolysiloxane compound as the internally added mold release agent per 100 parts by weight of the elastomer composition or the elastomer powder is effective. The addition in this case may be made either before or after the powdering. In this case, a methylpolysiloxane compound having a viscosity at 25°C of 20 x $10^{-6}$ m$^2$/s (20 centistokes) or more may be employed. The preferable viscosity range is 50 x $10^{-6}$ to 50 x $10^{-4}$ m$^2$/s (50 to 5000 centistokes); if the viscosity is too high, the effect of the mold release agent is reduced. On the other hand, if the amount of the internally added mold release agent is larger than 2 parts by weight, the thermal fusion between the elastomer powder particles is inhibited and only a molding having a low mechanical strength can be obtained. Also, the internally added mold release agent often bleeds out onto the mold surface, the mold is undesirably contaminated. Further, by controlling the amount of the internally added mold release agent, the reagglomeration after powdering can be avoided.

In the present invention, known heat-resistant stabilizers such as phenol type, sulfite type, phenylalkane type, phosphite type, amine type or amide type stabilizers, antioxidants, weathering resistant stabilizers, antistatic agents, metal soaps, lubricants such as waxes, and pigments for coloration can be formulated in necessary amounts.

The molded articles according to the present invention can be applicable as products in the following various application fields.

In the automobile fields, for example, various automobile parts including interior cover materials of, for example, instrument panels, console boxes, arm rests, head rests, door trims, rear panels, pillar trims, sunvisors, trunk room trims, trunk lid trims, air bag covers, seat buckles, head liners, gloves boxes and stearing wheel covers; interior molded articles of, for example, kicking plates and change lever boots; exterior parts, for example, spoilers, side moles, number plate housings, mirror housings, air dam skirts and mud guards; and other molded articles of automobile parts.

In the electric home appliance and office automation device fields, housings and covering materials of the housings for, for example, television sets, video sets, washing machines, dryers, cleaners, coolers, air-conditioners, remote controller cases, electronic ovens, toasters, coffee makers, pots, thermoses, dish washers, electric razors, hair dryers, microphones, head phones, beauty appliances, compact disk cases, cassette tape cases, personal computers, typewriters, light projectors, telephones, copying machines, facsimile machines, telex machines, etc.

In the sport good fields, decorative parts of sport shoes, grips of rackets, sport tools and goods of various ball games, covering materials of saddles and handlebar grips of bicycles, two-wheeled vehicles and tricycles, etc.

In the housing and building fields, covering materials of furnitures, desks, chairs, etc.; covering materials of gates, doors, fences, etc.; wall decorative materials; covering materials of curtain walls; indoor flooring materials of kitchens, washrooms, toilets, etc.; outdoor flooring materials such as verandas, terraces, balconies, carports, etc.; carpets such as front door or entrance mats, table cloths, coasters, ash tray doilys.

In the industrial part fields, grips and hoses for electric tools, etc., and the covering materials thereof; packing materials.

In other fields, covering materials of bags, briefcases, cases, files, pocket books, albums, stationarys, camera bodies, dolls and the other toys, and molded articles such as watch bands, outer frames of picture or photograph frames and their covering materials.

## Claims

1. A powder molding process, other than a powder slush molding process, which comprises molding a thermoplastic elastomeric powder which comprises a partially crosslinked elastomeric composition comprising a mixture of 5% by weight to 80% by weight of an ethylene-$\alpha$-olefin copolymer rubber and 20% by weight to 95% by weight of a polyolefin resin having a melt flow rate (MFR) of 20 g/10 min. or more at 230°C under a load of 2.16 kg according to JIS K-7210, obtainable by dynamically crosslinking the elastomeric composition in the presence of a crosslinking agent, wherein said elastomeric composition has a complex dynamic viscosity $\eta^*(1)$, at a frequency of 1 radian/see., in dynamic viscoelasticity measurement at 250°C, of $1{\cdot}5 \times 10^4$ Pa ($1.5 \times 10^5$ poise) or less, a Newtonian viscosity index n of 0.67 or less, where

$$n = \{\log\eta^*(1) - \log\eta^*(100)\}/2$$

in which $\eta^*(1)$ is as hereinbefore defined and $\eta^*(100)$ is the complex dynamic viscosity at a frequency of 100 radian/see. and which composition has a hardness (shore D) of 45 or less.

2. A process according to claim 1, wherein the ethylene-$\alpha$-olefin copolymer rubber is an ethylene-propylene-nonconjugated diene copolymer rubber.

3. A process according to claim 1 or 2, wherein the ethylene-$\alpha$-olefin copolymer rubber is an oil-extended olefin copolymer rubber comprising 30 to 120 parts by weight of a mineral oil softener per 100 parts by weight of ethylene-$\alpha$-olefin copolymer rubber, the oil-extended olefin copolymer rubber having a Mooney viscosity ($ML_{1+4}$ 100°C) of 130 to 350 at 100°C according to ASTM D-927-57T.

4. A process according to any one of claims 1 to 3, wherein the polyolefin resin is a polypropylene or a copolymer of propylene and an $\alpha$-olefin.

5. A process according to claim 1, wherein the crosslinking agent is a dialkyl peroxide.

6. A process according to claim 1, wherein crosslinking is carried out in the presence of a crosslinking coagent, said coagent being a bismaleimide compound.

7. A process according to any one of claims 1 to 6, wherein the thermoplastic elastomeric powder further comprises 0.2 to 20 parts by weight of a polyolefin resin powder as a mutual adhesion preventive agent per 100 parts by weight of the elastomeric composition.

8. A process according to any one of claims 1 or 7 whereof 95% by weight or more of the thermoplastic elastomeric powder is passable through a 32 mesh Tyler standard sieve.

9. A process according to any one of claims 2 to 8, wherein the thermoplastic elastomeric powder further comprises 50 parts by weight or less of an uncrosslinked ethylene-$\alpha$-olefin copolymer rubber and/or a polyolefin resin per 100 parts by weight of elastomeric composition which is partially crosslinked.

10. A process according to any one of claims 1 to 9, wherein the thermoplastic elastomeric powder comprises comprising 2 parts by weight or less of a methylpolysiloxane compound per 100 parts by weight of the elastomeric composition.

11. A process according to claim 10, wherein the methylpolysiloxane compound is a methylpolysiloxane compound having a viscosity at 25°C of $20 \times 10^{-6}$ m$^2$/s (20 centistokes) or more.

12. A process according to claim 10 or 11, wherein the methylpolysiloxane compound is dimethylpolysiloxane.

13. A process according to any one of claims 1 to 12, wherein the process is a flow dipping process or an electrostatic coating process or a flame spray coating process or a powder rotational molding process.

14. A process according to any one of claims 1 to 13, wherein the thermoplastic elastomeric powder is obtained by freeze pulverization of the elastomer composition using liquid $N_2$.

**Patentansprüche**

1. Pulverformungsverfahren außer einem Pulverhohlgußverfahren, aufweisend Formen eines thermoplastischen elastomeren Pulvers, welches eine teilweise vernetzte elastomere Zusammensetzung aufweist, die ein Gemisch von 5 Gew.-% bis 80 Gew.-% eines Ethylen-$\alpha$-Olefin-Copolymer-Kautschuks und 20 Gew.-% bis 95 Gew.-% eines Polyolefinharzes mit einer Schmelzfließrahigkeit (melt flow rate, MFR) von 20 g/10 min oder mehr bei 230°C unter einer Last von 2,16 kg gemäß JIS K-7210 enthält, welches erhältlich ist durch dynamisches Vernetzen der elastomeren Zusammensetzung in Gegenwart eines Vernetzungsmittels, wobei die elastomere Zusammensetzung bei der dynamischen Viskoelastizität bei 250°C bei einer Frequenz von 1 Radiant/sek. eine komplexe dynamische Viskosität $\eta^*(1)$ von $1,5 \times 10^4$ Pa $(1,5 \times 10^5$ Poise) oder weniger, einen Newtonschen Viskositätsindex n von 0,67 oder weniger hat, wobei

$$n = \{\log\eta^*(1) - \log\eta^*(100)\}/2,$$

worin $\eta^*(1)$ wie vorstehend definiert ist und $\eta^*(100)$ die komplexe dynamische Viskosität bei einer Frequenz von 100 Radiant/sek. ist, und wobei die Zusammensetzung eine Härte (Shore D) von 45 oder weniger hat.

2. Verfahren nach Anspruch 1, bei dem der Ethylen-$\alpha$-Olefin-Copolymer-Kautschuk ein Ethylen-Propylen-unkonjugiertes Dien-Copolymer-Kautschuk ist.

3. Verfahren nach Anspruch 1 oder 2, bei dem der Ethylen-$\alpha$-Olefin-Copolymer-Kautschuk ein ölverstreckter Olefin-Copolymer-Kautschuk mit 30 bis 120 Gewichtsteilen eines Mineralöl-Weichmachers pro 100 Gewichtsteilen des Ethylen-a-Olefin-Copolymer-Kautschuks ist, wobei der ölverstreckte Olefin-Copolymer-Kautschuk eine Mooney-Viskosität $(ML_{1+4}$ 100°C) von 130 bis 350 bei 100°C gemäß ASTM D-927-57T hat.

4. Verfahren nach einem der Ansprüche 1 bis 3, bei dem das Polyolefinharz ein Polypropylen oder ein Copolymer aus Propylen und einem $\alpha$-Olefin ist.

5. Verfahren nach Anspruch 1, bei dem das Vernetzungsmittel ein Dialkylperoxid ist.

6. Verfahren nach Anspruch 1, bei dem das Vernetzen in Gegenwart eines vemetzenden Co-Vernetzungsmittels durchgeführt wird, wobei das Co-Vernetzungsmittel eine Bismaleimid-Verbindung ist.

7. Verfahren nach einem der Ansprüche 1 bis 6, bei dem das thermoplastische elastomere Pulver außerdem aufweist 0,2 bis 20 Gewichtsteile eines Polyolefinharzpulvers pro 100 Gewichtsteilen der elastomeren Zusammensetzung als ein gegenseitige Anhaftung verhinderndes Mittel.

8. Verfahren nach einem der Ansprüche 1 bis 7, bei dem 95 Gew.-% oder mehr des thermoplastischen elastomeren Pulvers durch ein 32 Mesh Tyler Standard-Sicb hindurchgehen können.

9. Verfahren nach einem der Ansprüche 2 bis 8, bei dem das thermoplastische elastomere Pulver außerdem aufweist 50 Gewichtsteile oder weniger eines unvernetzten Ethylen-$\alpha$-Olefin-Copolymer-Kautschuks und/oder eines Polyolefinharzes pro 100 Gewichtsteilen der elastomeren Zusammensetzung, die teilweise vernetzt ist.

10. Verfahren nach einem der Ansprüche 1 bis 9, bei dem das thermoplastische elastomere Pulver 2 Gewichtsteile oder weniger einer Methylpolysiloxan-Verbindung pro 100 Gewichtsteile der elastomeren Zusammensetzung aufweist.

11. Verfahren nach Anspruch 10, bei dem die Methylpolysiloxan-Verbindung eine Methylpolysiloxan-Verbindung mit einer Viskosität bei 25°C von $20 \times 10^{-6}$m$^2$/s (20 Centistokes) oder mehr ist.

12. Verfahren nach Anspruch 10 oder 11, bei dem die Methylpolysiloxan-Verbindung Dimethylpolysiloxan ist.

13. Verfahren nach einem der Ansprüche 1 bis 12, bei dem das Verfahren ein Fließtauchverfahren oder ein elektrostatisches Beschichtungsverfahren oder ein Flammspritzverfahren oder ein Pulverrotationsformungsverfahren ist.

14. Verfahren nach einem der Ansprüche 1 bis 13, bei dem das thermoplastische elastomere Pulver durch Gefrierpulverisierung aer elastomeren Zusammensetzung unter Verwendung von flüssigem $N_2$ erhalten wird.

## Revendications

1. Procédé de moulage de poudre, différent d'un procédé de moulage de poudre par embouage, qui comprend le moulage d'une poudre élastomère thermoplastique qui comprend une composition élastomère partiellement réticulée comprenant un mélange de 5 % en poids à 80 % en poids d'un caoutchouc de copolymère d'éthylène-oléfine $\alpha$ et de 20 % en poids à 95 % en poids d'une résine de polyoléfine présentant un indice de fusion (MFR) de 20 g/10 min ou supérieur à 230°C sous une charge de 2,16 kg selon JIS K-7210, pouvant être obtenue par réticulation dynamique de la composition élastomère en présence d'un agent de réticulation, dans lequel ladite composition élastomère présente une viscosité dynamique complexe $\eta^*$ (1) à une fréquence d'un radian/s dans une mesure de visco-élasticité dynamique à 250°C, de $1,5 \times 10^4$ Pa ($1,5 \times 10^5$ poise) ou inférieure, un indice de viscosité de Newton n de 0,67 ou inférieur, où

$$n = \{\log \eta^*(1) - \eta^*(100)\}/2$$

dans laquelle $\eta^*$ (1) est définie comme ci-avant et $\eta^*$ (100) est la viscosité dynamique complexe à une fréquence de 100 radian/s.
et laquelle composition présente une dureté (shore D) de 45 ou inférieure.

2. Procédé selon la revendication 1, dans lequel le caoutchouc de copolymère d'éthylène-oléfine $\alpha$ est un caoutchouc de copolymère d'éthylène-propylène-diène non conjugué.

3. Procédé selon la revendication 1 ou 2, dans lequel le caoutchouc de copolymère d'éthylène-oléfine $\alpha$ est un caoutchouc de copolymère d'oléfine dilué à l'huile comprenant de 30 à 120 parties en poids d'un plastifiant d'huile minérale pour 100 parties en poids du caoutchouc de copolymère d'éthylène-oléfine $\alpha$,

le caoutchouc de copolymère d'oléfine dilué à l'huile présentant une viscosité ; Mooney ($ML_{1+4}$ 100°C) de 130 à 350 à 100°C selon ASTM D-927-57T.

4. Procédé selon l'une quelconque des revendications 1 à 3, dans lequel la résine de polyoléfine est un polypropylène ou un copolymère de propylène et d'une oléfine $\alpha$.

5. Procédé selon la revendication 1, dans lequel l'agent de réticulation est un peroxyde de dialkyle.

6. Procédé selon la revendication 1, dans lequel la réticulation est mise en oeuvre en présence d'un coagent de réticulation, ledit coagent de réticulation étant un composé de bismaléimide.

7. Procédé selon l'une quelconque des revendications 1 à 6, dans lequel la poudre astomère thermoplastique comprend en outre de 0,2 à 20 parties en poids d'une poudre de résine de polyoléfine en tant qu'agent évitant une adhésion mutuelle pour 100 parties en poids de la composition élastomère.

8. Procédé selon l'une quelconque des revendications 1 ou 7, dans lequel 95 % en poids ou plus de la poudre élastomère thermoplastique peut passer à travers un tamis standard Tyler 32 mèches.

9. Procédé selon l'une quelconque des revendications 2 à 8, dans lequel la poudre élastomère thermoplastique comprend en outre 50 parties en poids ou moins d'un caoutchouc de copolymère d'éthylène-oléfine $\alpha$ non réticulé et/ou une résine de polyoléfine pour 100 parties en poids de la composition élastomère qui est partiellement réticulée.

10. Procédé selon l'une quelconque des revendications 1 à 9, dans lequel la poudre élastomère thermoplastique comprend 2 parties en poids ou moins d'un composé de méthylpolysiloxane pour 100 parties en poids de la composition élastomère.

11. Procédé selon la revendication 10, dans lequel le composé de méthylpolysiloxane est un composé de méthylpolysiloxane présentant une viscosité à 25°C de $20 \times 10^{-6}m^2$ (20 centistokes) ou plus.

12. Procédé selon la revendication 11, dans lequel le composé de méthylpolysiloxane est le diméthylpolysiloxane.

13. Procédé selon l'une quelconque des revendications 1 à 12, dans lequel le procédé est un procédé d'immersion ou un procédé de revêtement électrostatique ou un procédé de revêtement au pistolet à flammes ou un procédé de moulage de poudre rotatif.

**14.** Procédé selon l'une quelconque des revendications 1 à 13, dans lequel la poudre élastomère thennoplastique est obtenue par pulvérisation à l'état congelé de la composition d'élastomère utilisant du $N_2$ liquide.